# EUROPEAN PATENT SPECIFICATION

(11) **EP 4 400 330 B1**
(45) Date of publication and mention of the grant of the patent: **11.02.2026**
(21) Application number: 23209301.3
(22) Date of filing: 13.11.2023
(51) Int. Cl.: B60C 9/20, B60C 9/22, B60C 9/28, B60C 11/00

(54) **MOTORCYCLE TIRE**
MOTORRADREIFEN
PNEU DE MOTOCYCLETTE

(30) Priority: 10.01.2023 JP 2023001847
(43) Date of publication of application: 17.07.2024
(73) Proprietor: Sumitomo Rubber Industries, Ltd., Kobe-shi, Hyogo 651-0072 (JP)
(72) Inventor: SHIBAMOTO, Shohei, Kobe-shi, 651-0072 (JP)
(74) Representative: Manitz Finsterwald Patent- und Rechtsanwaltspartnerschaft mbB

(56) References cited:
- EP-A1- 3 398 794
- EP-A2- 1 342 592
- JP-A- H0 624 207
- JP-A- H10 193 918
- US-A1- 2005 217 783

## Description

### Technical field

The present invention relates to a motorcycle tire.

### Background art

Patent Document JP 6946646 discloses a motorcycle tire provided, in the tread portion, with a belt layer and a band layer. The belt layer comprises a belt ply of belt cords. The band layer is disposed radially outside the belt layer and comprises a band cord arranged at an angle of not more than 5 degrees with respect to the tire circumferential direction.

EP 3 398 794 A1 discloses a motorcycle tire comprising the features according to the preamble of claim 1.

US 2005/0217783 A1 discloses a motorcycle tire comprising features according to a related technology.

JP H06 24207 A also discloses a motorcycle tire comprising features according to a related technology.

EP 1 342 592 A2 also discloses a motorcycle tire comprising features according to a related technology.

### Summary of the Invention

### Problems to be solved by the Invention

In the motorcycle tire described above, the tread crown region is strongly constricted by the band layer, therefore, excellent straight-running stability can be exhibited.

However, when running at high speed, the outer diameter of the tire is liable to increase in the tread shoulder regions, and the radius of curvature of the ground contacting surface of the tread portion increases accordingly, which may impair the cornering performance of the tire.

The present invention was made in view of the above-mentioned circumstances, and a primary objective of the present invention is to provide a motorcycle tire capable of achieving both straight-running stability and cornering performance.

### Means for solving the problems

This object is satisfied by a motorcycle tire comprising the features of claim 1.

The motorcycle tire comprises:
a tread portion having a ground contacting surface;
a pair of sidewall portions;
a pair of bead portions;
a carcass extending between bead portions through the tread portion and the sidewall portions;
tread reinforcing layers disposed radially outside the carcass in the tread portion, and including a belt layer and a band layer disposed radially outside the belt layer;
the belt layer comprising a first belt ply disposed adjacently to the carcass, and a second belt ply disposed radially outside the first belt ply; and
the band layer comprising at least one band cord wound spirally in the circumferential direction of the tire and having a developed width smaller than that of the belt layer,
wherein
in a meridian cross-section of the tire which is mounted on a standard wheel rim and of which internal pressure is 10 kPa, the ground contacting surface of the tread portion is such that: a radius of curvature Rc of the ground contacting surface of the tire in its crown region passing through the tire equator, is less than 95% of the cross-sectional width of the tire; and the radius of curvature Rc is smaller than a radius of curvature Rb of the ground contacting surface of the tire in a shoulder region defined on the axially outer side of an axial edge of the band layer.

### Effects of the Invention

Therefore, in the motorcycle tire according to the present invention, it is possible to achieve both straight running stability and cornering performance owing to the profile of the ground contacting surface.

### Brief description of the Drawings

FIG. 1 is a cross-sectional view a motorcycle tire as an embodiment of the present invention.
FIG. 2 is a perspective partial view showing an internal structure of the tire shown in FIG. 1.
FIG. 3 is a developed partial view showing the tread reinforcing layers of the tire shown in FIG. 1.
FIG. 4 shows a profile of the ground contacting surface of the tread portion in a low internal pressure state.

### Detailed description of the Invention

An embodiment of the present invention will now be described in detail in conjunction with accompanying drawings.

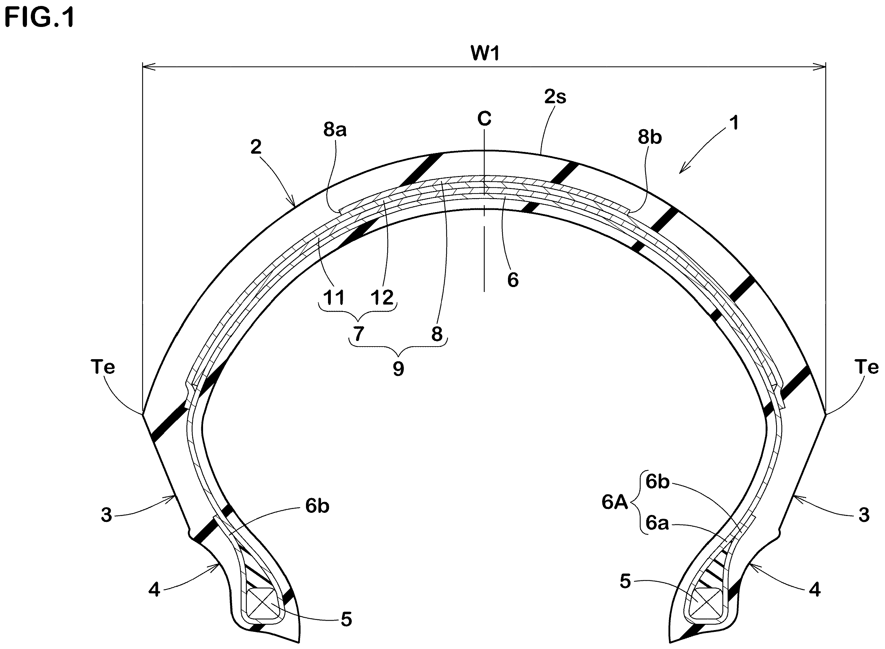

FIG. 1 is a tire meridian cross-sectional view of a motorcycle tire 1 as an embodiment of the present invention under its standard state including a rotational axis of the tire. In the present embodiment, the motorcycle tire 1 is for the front wheel of a motorcycle suitable for on-road sports riding. However, the present invention is not limited to the present embodiment.

In the case that the tire 1 is a kind of pneumatic tires for which various standards have been established,
the "standard state" means a state of the tire when mounted on a standard wheel rim, and inflated to a standard tire pressure, but loaded with no tire load.

The "standard wheel rim" is a wheel rim specified for the tire in a standard system including standards on which the tire is based, for example, the "Standard rim" in JATMA, "Design Rim" in TRA, "Measuring Rim" in ETRTO.

The "standard tire pressure" is the air pressure specified for the tire in the above-mentioned standard system, for example, the "maximum air pressure" in JATMA, "INFLATION PRESSURE" in ETRTO, and the maximum air pressure listed in the table "TIRE LOAD LIMITS AT VARIOUS COLD INFLATION PRESSURES" in TRA.

In the case that the tire 1 is a tire for which various standards are not yet established,
the "standard state" means a standard usage state depending on the purpose of use of the tire and in a condition in which the tire is not attached to a vehicle and no tire load is applied.

In this application including specification and claims, dimensions and positions of each part or portion of the tire refer to those measured under the standard state unless otherwise noted,

As shown in FIG. 1, the tire 1 in the present embodiment comprises a tread portion 2, a pair of sidewall portions 3, and a pair of bead portions 4.

The sidewall portions 3 extend radially inwardly from the ends in the tire axial direction of the tread portion 2.

The bead portions 4 are positioned at the inner ends in the tire radial direction of the sidewall portions 3.

Each of the bead portions 4 is provided with a bead core 5 embedded therein.

The tread portion 2 has a pair of tread edges Te and a ground contacting surface 2s therebetween, and the ground contacting surface is curved in an arc profile convex outward in the tire radial direction so that a sufficient ground contact area can be secured even when cornering at a large bank angle.

The tread edges Te correspond to the axially outermost ends of the ground contacting surface 2s of the tread portion 2, and may contact with the road surface when cornering at near the maximum bank angle.

The tire 1 comprises a carcass 6 extending between the bead portions 4 through the tread portion 2 and the sidewall portions 3.

The carcass 6 is composed of one or more carcass plies 6A, in this embodiment, composed of only one carcass ply 6A.

The carcass ply 6A is made of rubberized carcass cords extending between the bead portions 4 through the tread portion 2 and the sidewall portions 3, and is turned up around the bead core 5 in each bead portion 4 from the inside to outside of the tire so as to form a pair of turned-up portions 6b and a main portion 6a therebetween.

The tread portion 2 is provided with tread reinforcing layers 9 disposed radially outside the carcass 6.

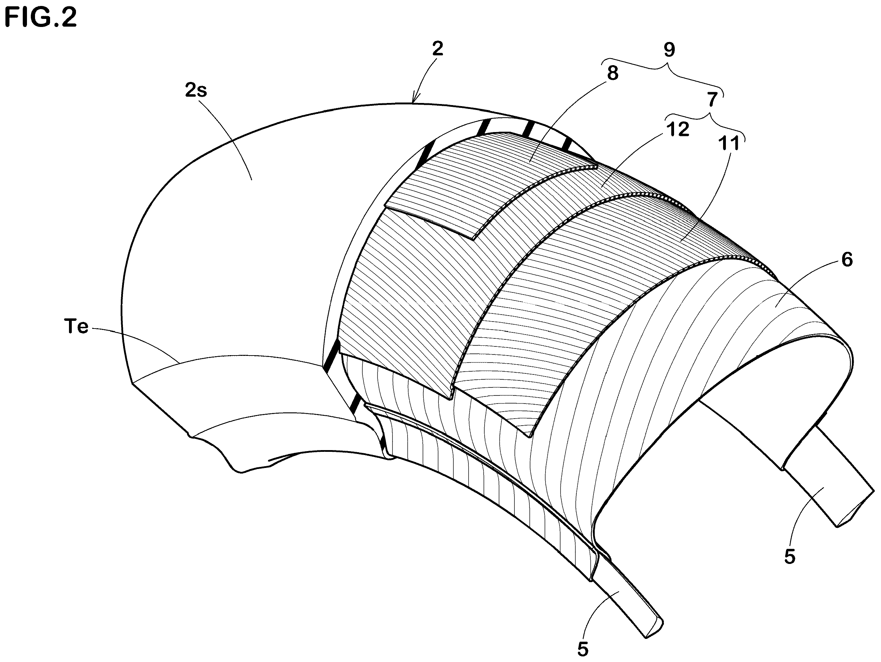

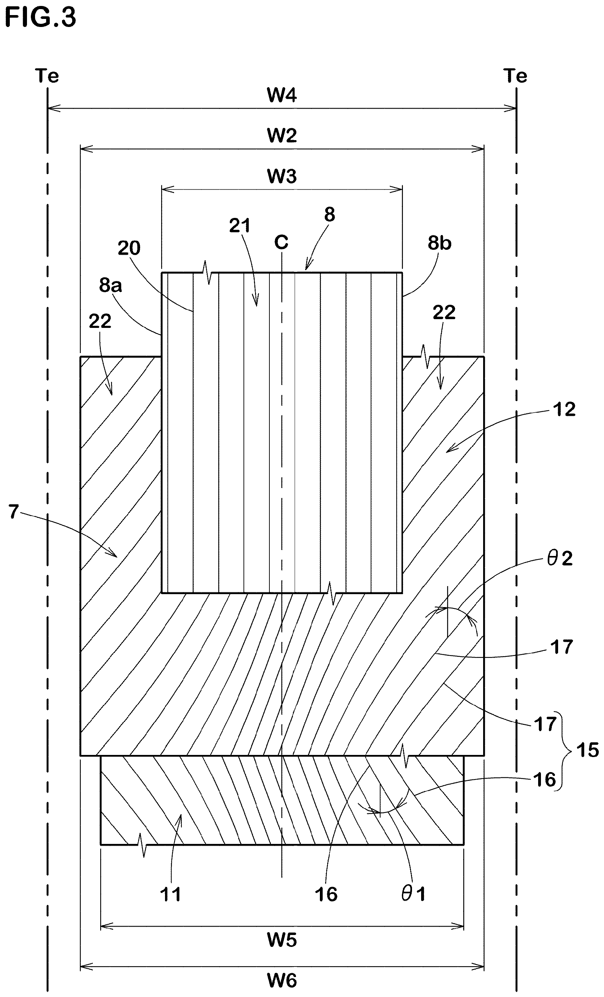

As shown in FIGS. 2 and 3, the tread reinforcing layers 9 include a belt layer 7 and a band layer 8 on the radially outside of the belt layer 7.

The belt layer 7 is composed of at least one belt ply of rubberized belt cords 15 arranged at an angle of from 10 to 40 degrees with respect to the tire circumferential direction.

In this embodiment, as shown in FIG. 3, the belt layer 7 is composed of a first belt ply 11 disposed adjacently to the carcass 6, and a second belt ply 12 disposed on the radially outside of the first belt ply 11.

Preferably, the belt layer 7 is composed of only two cross belt plies 11 and 12.

The band layer 8 includes at least one band cord 20 wound spirally and circumferentially of the tire.

The band layer 8 may be a jointless band in which one or more band cords are continuously wound spirally and circumferentially of the tire.

Further, the band layer 8 may be one in which a band cord 20 coated with topping rubber is wound, or a band cord 20 not covered with rubber may be wound on a rubber sheet.

The band layer 8 in this embodiment is configured, for example, as a jointless band in which four band cords 20 covered with topping rubber are wound spirally.

Further, the developed width W3 of the band layer 8 is smaller than the developed width W2 of the belt layer 7.

Incidentally, the developed width means the dimension in the tire axial direction when the band layer 8 or the belt layer 7 is developed flatly.

The same applies to the following description of this specification.

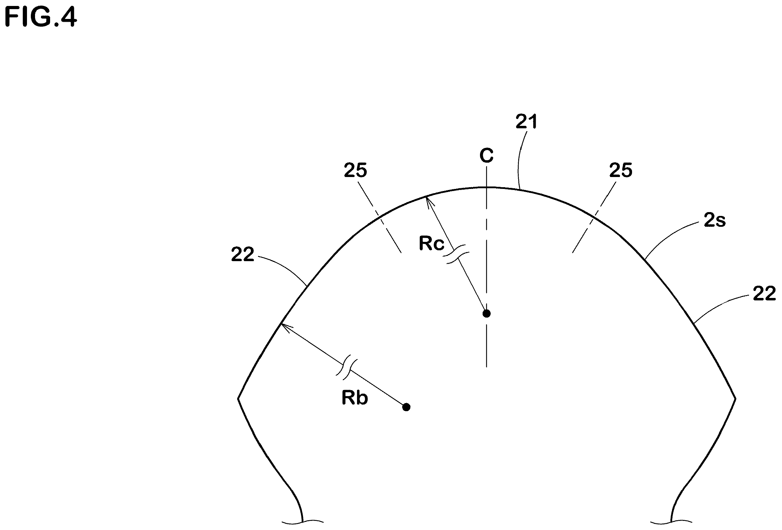

FIG. 4 shows a profile of the ground contacting surface 2s of the tread portion 2 in the meridian cross section of the tire 1 including the rotational axis of the tire when mounted on a standard wheel rim at an internal pressure of 10 kPa (hereinafter referred to as the "low internal pressure state"). In the low internal pressure state, as shown in FIG. 4, the radius of curvature Rc of the ground contacting surface 2s in a crown region 21 passing through the tire equator C is less than 95% of the cross-sectional width W1 of the tire (shown in FIG. 1).

The cross-sectional width W1 of the tire corresponds to the width in the tire axial direction in the standard state of the tire.

Further, the radius of curvature Rb of the ground contacting surface 2s in shoulder regions 22 respectively on the outer side in the tire axial direction than axial edges 8a and 8b (shown in FIG. 3) of the band layer 8, is larger than the radius of curvature Rc.

In FIG. 4, two straight lines 25 respectively passing through the axial edges 8a and 8b of the band layer 8 orthogonally to the ground contacting surface 2s are shown.

The crown region 21 is defined as extending between the two straight lines 25, and the shoulder regions 22 are respectively defined as being axially outside the two straight lines 25.

By the above-described structure and tread profile, the motorcycle tire 1 can achieve both straight running stability and cornering performance. The reason may be as follows.

The band layer 8 can effectively suppresses the increase of the tire outer diameter in the crown region 21 during highspeed running, and can provide excellent straight-running stability.

Further, during cornering at a relatively large bank angle at which a part of the tread portion where the band layer 8 is not disposed, contacts with the ground since the developed width W3 of the band layer 8 is smaller than the developed width W2 of the belt layer 7, therefore, the belt layer 7 can exerts a large cornering force, and excellent cornering performance can be obtained.

In general, the outer diameter of a conventional motorcycle tire of which tread portion is reinforced with two cross belt plies, is liable to increase in the shoulder regions than in the crown region, which results in deterioration of the cornering performance.

On the other hand, in the motorcycle tire in this embodiment, since the tread profile in the low internal pressure state is defined so that the radius of curvature Rc in the crown region 21 is relatively small as described above,
even if the tire outer diameter is changed by applying a normal internal pressure, the change in the radius of curvature of the tread profile mainly occurs in the crown region 21, and hardly occurs in the shoulder regions 22, therefore, the radius of curvature in the shoulder regions 22 is maintained appropriately without becoming excessively large.

As a result, the tread profile in a normally inflated state is optimized to prevent the deterioration of the cornering performance.

Hereinafter, the present embodiment will be described in more detail. Each configuration described below represents a specific aspect of the present embodiment. Therefore, the present invention can exhibit the above effects even if it does not have the configuration described below. Further, even if any one of the configurations described below is applied singly to the tire of the present invention having the features described above, an improvement in performance corresponding to each configuration can be expected. Furthermore, when some of the respective configurations described below are applied in combination, it is possible to expect a combined improvement in performance according to the respective configurations.

In order to strongly reinforce the tread portion 2 and to bring out excellent cornering performance, in the belt layer 7 in this embodiment, as shown in FIG. 3, the belt cords 16 (15) of the first belt ply 11 are inclined in a first direction (downward to the right in FIG. 3) with respect to the tire circumferential direction at an angle θ1 from 10 to 40 degrees with respect to the tire circumferential direction, and the belt cords 17 (15) of the second belt ply 12 are inclined in a second direction (upwardly to the right in FIG. 3) with respect to the tire circumferential direction opposite to the first direction at an angle θ2 from 10 to 40 degrees with respect to the tire circumferential direction.

As the inclination of the belt cords 15 is changed as shown in FIG. 3, the angle θ1, θ2 of the belt cords 15 can be expressed as an average angle of a belt cord 15.

The average angle is obtained by dividing the length of the belt cord into minute parts having an equal length, and summing up angles of the minute parts, and then dividing the sum total by the number of the minute parts. The length of each minute part is preferably at most 5 mm.

By setting the belt cord angles as described above, it is possible to improve the straight-running stability and cornering performance in a well-balanced manner.

In the first belt ply 11, as shown in FIG. 3, the angle of the belt cords 16 becomes maximum at the edges in the tire axial direction of the first belt ply 11 and is larger than at the tire equator C.

The angle of the belt cords 16 in the shoulder regions 22 is larger than the angle of the belt cords 16 in the crown region 21. Here, the angle means the average angle in the above sense.

Due to this arrangement of the belt cord 16, in the crown region 21, the rigidity in the tire circumferential direction is enhanced, and in the shoulder regions 22, the rigidity in the tire axial direction is enhanced, therefore, both the straight-running stability and the cornering performance can be improved in a well-balanced manner.

The developed width W5 of the first belt ply 11 and the developed width W6 of the second belt ply 12 are set in a range from 80% to 100%, preferably from 90% to 95% of the developed width W4 of the tread portion 2.

Preferably, the developed width W6 of the second belt ply 12 is larger than the developed width W5 of the first belt ply 11. Thereby, damage starting from near the axial edges of the first belt ply 11 is suppressed, and the durability of the shoulder regions 22 can be improved.

Here, the developed width W4 of the tread portion 2 corresponds to the distance in the tire axial direction between the tread edges Te when the ground contacting surface 2s of the tread portion 2 is developed flatly.

As described above, the average angle θ2 of the belt cords 17 of the second belt ply 12 is in a range from 10 to 40 degrees with respect to the tire circumferential direction. Further, the maximum angle of the belt cords 17 with respect to the tire circumferential direction at the edges in the tire axial direction of the second belt ply 12 is larger than the angle of the belt cords 17 with respect to the tire circumferential direction at the tire equator C.

Preferably, the angle of the belt cords 17 in the shoulder regions 22 is larger than the angle of the belt cords 17 in the crown region 21. Here, the angle means the average angle in the above sense.

By arranging the belt cords 17 of the second belt ply 12 in this manner, the straight-running stability and the cornering performance are improved in a well-balanced manner.

For the belt cords 15 (16, 17), organic fiber cords such as polyester, nylon, and aramid can be suitably used. But, the belt cords 15 are not limited to such materials.

The developed width W3 of the band layer 8 in this example is in a range from 20% to 80% of the developed width W4 of the tread portion 2.

On the other hand, from the viewpoint of exerting a large cornering force even at relatively small bank angles, it is preferred that the developed width W3 of the band layer 8 is relatively small. From this viewpoint, the developed width W3 of the band layer 8 is preferably set in a range from 20% to 60%, more preferably 20% to 40% of the developed width W4 of the tread portion 2.

It is desirable that the rupture strength of the band cord 20 is greater than the rupture strength of the belt cord 15. From this point of view, it is desirable that the band cord 20 is a steel cord when the belt cords 15 are organic fiber cords as in the present embodiment in particular.

As a result, even if the developed width W3 of the band layer 8 is small, the straight running stability is surely improved.

In the low pressure state, it is preferable that the radius of curvature Rc in the crown region 21 is in a range from 40% to 60% of the cross-sectional width W1 of the tire.

Thereby, in the normal pressure state, an increase in the radius of curvature of the ground contacting surface in the shoulder regions 22 can be reliably suppressed.

In the low pressure state, it is preferable that the radius of curvature Rb in the shoulder regions 22 is not less than 2.0 times, more preferably not less than 2.5 times, but not more than 3.5 times, more preferably not more than 3.0 times the radius of curvature Rc in the crown region 21 in order to improve the straight-running stability and the cornering performance in a well-balanced manner.

while detailed description has been made of a preferable embodiment of the present invention, the present invention can be embodied in various forms within the scope of the appended claims.

### comparison tests

Based on the structure shown in FIG. 1, motorcycle tires (for front wheel) of size 120/70ZR17 were experimentally manufactured as Example tires 1-11.

Further, Comparative Example tires 1-3 were experimentally manufactured, having substantially the same structures as Example tires except for the following:
in Comparative Example tire 1, the belt layer was omitted;
in Comparative Example tire 2, the band layer was omitted;
in Comparative Example tire 3, the radius of curvature Rc was the same as the radius of curvature Rb.

In each test tire having the belt layer, the developed width W2 of the belt layer is 95% of the developed width W4 of the tread portion.

Other specifications of the test tires are shown in Tables 1 and 2.

Using a 1000cc street bike (Rim size: MT3.50x17, Tire pressure: 250 kPa), the test tires were tested for the straight-running stability and cornering performance as follows:

### < Straight-running stability >

The straight-running stability was evaluated by the braking stability and convergence.

The braking stability is the stability when applying full brakes when running straight at 220 km/h on an asphalt paved road.

The convergence is the convergence when a disturbance is input during running straight.

The test results are shown in Tables 1 and 2 by a score based on Comparative Example tire 1 being 100, wherein the larger the numerical value, the better the evaluation result.

### < cornering performance >

The cornering performance was evaluated by the turning ability and the degree of freedom in turning.

The turning ability means the ease with which a motorcycle can change the traveling direction by leaning the motorcycle on an asphalt-paved road.

The degree of freedom in turning means the ease with which the traveling speed and bank angle can be changed during turning.

The test results are shown in Tables 1 and 2 by a score based on Comparative Example tire 1 being 100, wherein the larger the numerical value, the better the evaluation result.

**Table 1**

| Tire | | Comparative Example 1 | Comparative Example 2 | Comparative Example 3 | Example 1 | Example 2 | Example 3 | Example 4 |
|---|---|---|---|---|---|---|---|---|
| Belt cord angle at tire equator (deg) | | -- | 20 | 20 | 20 | 40 | 10 | 20 |
| Belt cord angle at belt ply edges (deg) | | -- | 28 | 22 | 24 | 48 | 12 | 24 |
| Band layer developed width W3/ | | | | | | | | |
| | Tread portion developed width W4 (%) | 95 | -- | 30 | 80 | 80 | 80 | 60 |
| Radius of curvature Rc in crown region (mm) | | 60 | 60 | 60 | 60 | 60 | 60 | 60 |
| Radius of curvature Rb in shoulder regions (mm) | | 60 | 60 | 60 | 120 | 120 | 120 | 120 |
| Rc/Rb | | 1.0 | 1.0 | 1.0 | 2.0 | 2.0 | 2.0 | 2.0 |
| Straight-running stability | | | | | | | | |
| | Braking stability | 100 | 80 | 90 | 120 | 110 | 125 | 120 |
| | Convergence | 100 | 80 | 90 | 120 | 100 | 110 | 120 |
| Cornering performance | | | | | | | | |
| | Turning ability | 100 | 110 | 100 | 110 | 105 | 105 | 115 |
| | Freedom degree in turning | 100 | 120 | 100 | 110 | 105 | 105 | 115 |

**Table 2**

| Tire | | Example 5 | Example 6 | Example 7 | Example 8 | Example 9 | Example 10 | Example 11 |
|---|---|---|---|---|---|---|---|---|
| Belt cord angle at tire equator (deg) | | 20 | 20 | 20 | 20 | 20 | 20 | 20 |
| Belt cord angle at belt ply edges (deg) | | 24 | 24 | 22 | 22 | 22 | 22 | 22 |
| Band layer developed width W3/ | | | | | | | | |
| | Tread portion developed width W4 (%) | 40 | 20 | 30 | 30 | 30 | 30 | 30 |
| Radius of curvature Rc in crown region (mm) | | 60 | 60 | 60 | 60 | 60 | 55 | 55 |
| Radius of curvature Rb in shoulder regions (mm) | | 120 | 120 | 120 | 120 | 120 | 150 | 220 |
| Rc/Rb | | 2.0 | 2.0 | 2.0 | 2.0 | 2.0 | 2.73 | 4.0 |
| Straight-running stability | | | | | | | | |
| | Braking stability | 120 | 110 | 120 | 120 | 120 | 120 | 110 |
| | Convergence | 120 | 110 | 120 | 120 | 120 | 120 | 110 |
| Cornering performance | | | | | | | | |
| | Turning ability | 120 | 110 | 125 | 125 | 130 | 135 | 130 |
| | Freedom degree in turning | 120 | 120 | 125 | 125 | 120 | 125 | 110 |

From the test results, it was confirmed that the working example tires could achieve both straight-running stability and cornering performance.

### Description of the reference signs

- 2: tread portion
- 2s: ground contacting surface
- 3: sidewall portion
- 4: bead portion
- 6: carcass
- 7: belt layer
- 8: band layer
- 9: tread reinforcing layer
- 11: first belt ply
- 12: second belt ply
- 21: crown portion
- 22: shoulder portion
- Rc: radius of curvature of ground contacting surface in crown region
- Rb: radius of curvature of ground contacting surface in shoulder portion

## Claims

1. A motorcycle tire (1) comprising:
a tread portion (2) having a ground contacting surface (2s);
a pair of sidewall portions (3);
a pair of bead portions (4);
a carcass (6) extending between bead portions (4) through the tread portion (2) and the sidewall portions (3);
tread reinforcing layers (9) disposed radially outside the carcass (6) in the tread portion (2), and including a belt layer (7) and a band layer (8) disposed radially outside the belt layer (7);
the belt layer (7) comprising a first belt ply (11) disposed adjacently to the carcass (6) and a second belt (12) ply disposed radially outside the first belt ply (11); and
the band layer (8) comprising a band cord (20) wound spirally in the circumferential direction of the tire (1),
wherein
in a meridian cross-section of the tire (1) which is mounted on a standard wheel rim and of which internal pressure is 10 kPa,
the ground contacting surface (2s) of the tread portion (2) is such that:
a radius of curvature (Rc) of the ground contacting surface (2s) of the tire (1) in its crown region passing through the tire equator, is less than 95% of the cross-sectional width (W1) of the tire (1); and
the radius of curvature (Rc) is smaller than a radius of curvature (Rb) of the ground contacting surface (2s) of the tire (1) in a shoulder region (22) defined on the axially outer side of an axial edge (8a, 8b) of the band layer (8),
the first belt ply (11) comprises a plurality of first belt cords (16) inclined in a first direction with respect to the tire circumferential direction, and
the second belt ply (12) comprises a plurality of second belt cords (17) inclined in a second direction opposite to the first direction with respect to the tire circumferential direction,
**characterized in that**
the band layer (8) has a developed width (W3) smaller than that (W2) of the belt layer (7),
an angle (θ1) of the first belt cords (16) at axial edges of the first belt ply (11) with respect to the tire circumferential direction is larger than an angle of the first belt cords (16) at the tire equator with respect to the tire circumferential direction, and
an angle (θ2) of the second belt cords (17) at axial edges of the second belt ply (12) with respect to the tire circumferential direction is larger than an angle of the second belt cords (17) at the tire equator with respect to the tire circumferential direction.

2. The motorcycle tire (1) according to claim 1, wherein
the radius of curvature (Rb) is 2.0 to 3.0 times the radius of curvature (Rc).

3. The motorcycle tire (1) according to claim 1 or 2, wherein
an average angle (θ1) of the first belt cords (16) with respect to the tire circumferential direction is 10 to 40 degrees.

4. The motorcycle tire (1) according to any one of claims 1 to 3, wherein
an average angle (θ2) of the second belt cords (17) with respect to the tire circumferential direction is 10 to 40 degrees.

5. The motorcycle tire (1) according to any one of claims 1 to 4, wherein
a developed width (W6) of the second belt ply (12) is larger than a developed width (W5) of the first belt ply (11).

6. The motorcycle (1) tire according to any one of claims 1 to 5, wherein
a developed width (W3) of the band layer (8) is 20% to 80% of a developed width (W4) of the tread portion (2).

7. The motorcycle tire (1) according to any one of claims 1 to 6, wherein
a rupture strength of the band cord (20) is greater than a rupture strength of the belt cord (15, 16, 17) included in the belt layer (7).

8. The motorcycle tire (1) according to any one of claims 1 to 7, wherein the band cord (20) is a steel cord.

## Patentansprüche

1. Motorradreifen (1) umfassend:
einen Laufflächenabschnitt (2) mit einer Bodenkontaktfläche (2s);
ein Paar von Seitenwandabschnitten (3);
ein Paar von Wulstabschnitten (4);
eine Karkasse (6), die sich zwischen den Wulstabschnitten (4) über den Laufflächenabschnitt (2) und die Seitenwandabschnitte (3) erstreckt;
Laufflächenverstärkungslagen (9), die radial außerhalb der Karkasse (6) in dem Laufflächenabschnitt (2) angeordnet sind und die eine Gürtellage (7) sowie eine Bandlage (8) umfassen, die radial außerhalb der Gürtellage (7) angeordnet ist;
wobei die Gürtellage (7) eine erste Gürtelschicht (11), die angrenzend an die Karkasse (6) angeordnet ist, und eine zweite Gürtelschicht (12) umfasst, die radial außerhalb der ersten Gürtelschicht (11) angeordnet ist; und
wobei die Bandlage (8) einen Bandkord (20) umfasst, der in der Umfangsrichtung des Reifens (1) spiralförmig gewunden ist,
wobei
in einem Meridianquerschnitt des Reifens (1), der an einer Standardradfelge montiert ist und dessen Innendruck 10 kPa beträgt,
die Bodenkontaktfläche (2s) des Laufflächenabschnitts (2) derart beschaffen ist, dass:
ein Krümmungsradius (Rc) der Bodenkontaktfläche (2s) des Reifens (1) in dessen Kronenbereich, der über den Reifenäquator verläuft, kleiner als 95% der Querschnittsbreite (W1) des Reifens (1) ist; und
der Krümmungsradius (Rc) kleiner als ein Krümmungsradius (Rb) der Bodenkontaktfläche (2s) des Reifens (1) in einem Schulterbereich (22) ist, der auf einer axialen Außenseite eines axialen Randes (8a, 8b) der Bandlage (8) definiert ist,
die erste Gürtelschicht (11) mehrere erste Gürtelkorde (16) umfasst, die bezogen auf die Reifenumfangsrichtung in einer ersten Richtung geneigt sind, und
die zweite Gürtelschicht (12) mehrere zweite Gürtelkorde (17) umfasst, die bezogen auf die Reifenumfangsrichtung in einer zweiten Richtung entgegengesetzt zu der ersten Richtung geneigt sind,
**dadurch gekennzeichnet, dass**
die Bandlage (8) eine entwickelte Breite (W3) aufweist, die kleiner als diejenige (W2) der Gürtellage (7) ist,
ein Winkel (θ1) der ersten Gürtelkorde (16) an axialen Rändern der ersten Gürtellage (11) bezogen auf die Reifenumfangsrichtung größer als ein Winkel der ersten Gürtelkorde (16) an dem Reifenäquator bezogen auf die Reifenumfangsrichtung ist und
ein Winkel (θ2) der zweiten Gürtelkorde (17) an axialen Rändern der zweiten Gürtelschicht (12) bezogen auf die Reifenumfangsrichtung größer als ein Winkel der zweiten Gürtelkorde (17) an dem Reifenäquator bezogen auf die Reifenumfangsrichtung ist.

2. Motorradreifen (1) nach Anspruch 1, wobei
der Krümmungsradius (Rb) das 2,0- bis 3,0-fache des Krümmungsradius (Rc) beträgt.

3. Motorradreifen (1) nach Anspruch 1 oder 2, wobei
ein mittlerer Winkel (θ1) der ersten Gürtelkorde (16) bezogen auf die Riefenumfangsrichtung 10 bis 40 Grad beträgt.

4. Motorreifen (1) nach einem der Ansprüche 1 bis 3, wobei
ein mittlerer Winkel (θ2) der zweiten Gürtelkorde (17) bezogen auf die Reifenumfangsrichtung 10 bis 40 Grad beträgt.

5. Motorradreifen (1) nach einem der Ansprüche 1 bis 4, wobei
eine entwickelte Breite (W6) der zweiten Gürtelschicht (12) größer als eine entwickelte Breite (W5) der ersten Gürtelschicht (11) ist.

6. Motorradreifen (1) nach einem der Ansprüche 1 bis 5, wobei
eine entwickelte Breite (W3) der Bandlage (8) 20% bis 80% einer entwickelten Breite (W4) des Laufflächenabschnitts (2) beträgt.

7. Motorradreifen (1) nach einem der Ansprüche 1 bis 6, wobei
eine Bruchfestigkeit des Bandkords (20) größer als eine Bruchfestigkeit des Gürtelkords (15, 16, 17) ist, der in der Gürtellage (7) eingebunden ist.

8. Motorradreifen (1) nach einem der Ansprüche 1 bis 7, wobei der Bandkord (20) ein Stahlkord ist.

## Revendications

1. Pneumatique pour motocyclette (1) comprenant :
une portion formant bande de roulement (2) ayant une surface de contact au sol (2s) ;
une paire de portions formant parois latérales (3) ;
une paire de portions de talon (4) ;
une carcasse (6) s'étendant entre des portions de talon (4) à travers la portion formant bande de roulement (2) et les portions formant parois latérales (3) ;
des couches de renforcement de bande de roulement (9) disposées radialement à l'extérieur de la carcasse (6) dans la portion formant bande de roulement (2), et incluant une couche de ceinture (7) et une couche de bande (8) disposée radialement à l'extérieur de la couche de ceinture (7) ;
la couche de ceinture (7) comprenant une première nappe de ceinture (11) disposée de manière adjacente à la carcasse (6) et une seconde nappe de ceinture (12) disposée radialement à l'extérieur de la première nappe de ceinture (11) ; et
la couche de bande (8) comprenant un câblé de bande (20) enroulé en spirale dans la direction circonférentielle du pneumatique (1),
dans lequel
dans une section transversale méridienne du pneumatique (1) qui est monté sur une jante de roue standard et dont une pression interne est de 10 kPa,
la surface de contact au sol (2s) de la portion formant bande de roulement (2) est telle que :
un rayon de courbure (Rc) de la surface de contact au sol (2s) du pneumatique (1) dans sa région de contact au sol passant à travers l'équateur de pneumatique, est inférieur à 95 % de la largeur de section transversale (W1) du pneumatique (1) ; et
le rayon de courbure (Rc) est plus petit qu'un rayon de courbure (Rb) de la surface de contact au sol (2s) du pneumatique (1) dans une région d'épaulement (22) définie sur le côté axialement extérieur d'un bord axial (8a, 8b) de la couche de bande (8),
la première nappe de ceinture (11) comprend une pluralité de premiers câblés de ceinture (16) inclinés dans une première direction par rapport à la direction circonférentielle du pneumatique, et
la seconde nappe de ceinture (12) comprend une pluralité de seconds câblés de ceinture (17) inclinés dans une seconde direction opposée à la première direction par rapport à la direction circonférentielle du pneumatique,
**caractérisé en ce que**
la couche de bande (8) a une largeur développée (W3) plus petite que celle (W2) de la couche de ceinture (7),
un angle (θ1) des premiers câblés de ceinture (16) au niveau de bords axiaux de la première nappe de ceinture (11) par rapport à la direction circonférentielle du pneumatique est plus grand qu'un angle des premiers câblés de ceinture (16) au niveau de l'équateur de pneumatique par rapport à la direction circonférentielle du pneumatique, et
un angle (θ2) des seconds câblés de ceinture (17) au niveau de bords axiaux de la seconde nappe de ceinture (12) par rapport à la direction circonférentielle du pneumatique est plus grand qu'un angle des seconds câblés de ceinture (17) au niveau de l'équateur de pneumatique par rapport à la direction circonférentielle du pneumatique.

2. Pneumatique pour motocyclette (1) selon la revendication 1, dans lequel
le rayon de courbure (Rb) est 2,0 à 3,0 fois le rayon de courbure (Rc).

3. Pneumatique pour motocyclette (1) selon la revendication 1 ou 2, dans lequel
un angle moyen (θ1) des premiers câblés de ceinture (16) par rapport à la direction circonférentielle du pneumatique est de 10 à 40 degrés.

4. Pneumatique pour motocyclette (1) selon l'une quelconque des revendications 1 à 3, dans lequel
un angle moyen (θ2) des seconds câblés de ceinture (17) par rapport à la direction circonférentielle du pneumatique est de 10 à 40 degrés.

5. Pneumatique pour motocyclette (1) selon l'une quelconque des revendications 1 à 4, dans lequel
une largeur développée (W6) de la seconde nappe de ceinture (12) est plus grande qu'une largeur développée (W5) de la première nappe de ceinture (11).

6. Pneumatique pour motocyclette (1) selon l'une quelconque des revendications 1 à 5, dans lequel
une largeur développée (W3) de la couche de bande (8) est de 20 % à 80 % d'une largeur développée (W4) de la portion formant bande de roulement (2).

7. Pneumatique pour motocyclette (1) selon l'une quelconque des revendications 1 à 6, dans lequel
une résistance à la rupture du câblé de bande (20) est supérieure à une résistance à la rupture du câblé de ceinture (15, 16, 17) inclus dans la couche de ceinture (7).

8. Pneumatique pour motocyclette (1) selon l'une quelconque des revendications 1 à 7, dans lequel le câblé de bande (20) est un câblé en acier.
